Europäisches Patentamt

European Patent Office

Office européen des brevets

(11) Publication number: **0 511 672 A1**

## EUROPEAN PATENT APPLICATION

(21) Application number: **92107407.6**

(22) Date of filing: **30.04.92**

(51) Int. Cl.⁵: **C08G 77/24**

(30) Priority: **30.04.91 JP 126668/91**

(43) Date of publication of application:
**04.11.92 Bulletin 92/45**

(84) Designated Contracting States:
**DE FR GB**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Kobayashi, Hideki**
**426-14, Saihiro**
**Ichihara-shi, Chiba prefecture(JP)**
Inventor: **Nishiumi, Wataru**
**6, 1-chome, Yushudai Nishi**
**Ichihara-shi, Chiba prefecture(JP)**

(74) Representative: **Spott, Gottfried, Dr.**
**Spott Weinmiller & Partner**
**Sendlinger-Tor-Platz 11**
**W-8000 München 2(DE)**

(54) **Fluorosilicone resin and method for its preparation.**

㉗ A fluorosilicone resin and methods for its preparation are disclosed, said resin having the average unit formula

$$(CF_3CH_2CH_2Me_2SiO_{1/2})_n(SiO_{4/2})_m$$

wherein Me denotes a methyl radical and n and m are each numbers greater than zero, with the proviso that said resin is solid at room temperature and either does not have a softening point or has a softening point of at least 40°C.

EP 0 511 672 A1

The present invention relates to a novel fluorosilicone resin and methods for its preparation.

Japanese Patent Publication Number 60-27691 [27,691/85] discloses a silicone resin which contains the vinyl and trifluoropropyl groups and $SiO_{4/2}$ unit, which resin is liquid at room temperature. However, this document does not describe a silicone resin which is composed of the triorganosiloxane and $SiO_{4/2}$ units, and which resin lacks the vinyl group but still contains the trifluoropropyl group. The latter resin is a solid at room temperature and either does not have a softening point or has a softening point of at least 40°C. Nor does this document describe a method for the preparation of such a silicone resin.

The present invention takes as its object the introduction of a fluorosilicone resin which is composed of triorganosiloxane and $SiO_{4/2}$ units, which resin lacks the vinyl group and contains the trifluoropropyl group. The present invention thus relates to a fluorosilicone resin having the average unit formula

$$(CF_3 CH_2 CH_2 Me_2 SiO_{1/2})_n (SiO_{4/2})_m$$

wherein Me denotes a methyl radical and n and m are each numbers greater than zero, with the proviso that said resin is a solid at room temperature and either does not have a softening point or has a softening point of at least 40°C.

The present invention also relates to methods for the preparation of this fluorosilicone resin.

To explain the preceding in greater detail, n (number of moles of $CF_3 CH_2 CH_2 Me_2 SiO_{1/2}$ units) and m (number of moles of $SiO_{4/2}$ units) in the preceding formula for the fluorosilicone resin according to the present invention both have values greater than zero. Furthermore, the fluorosilicone resin according to the present invention either has no softening point or has a softening point of at least 40°C. In the present case, the softening point increases as the value of n/m declines, and n/m should generally be 3 in order to make the softening point at least 40°C. A value of n/m approaching 0.2 would give very high softening points while n/m of less than 0.2 leads to fluorosilicone resins which are insoluble in organic solvents. Therefore, preferred values for the n/m ratio fall in the range of 0.2 to 3.0. In addition, the fluorosilicone resin according to the present invention is soluble in ethers, such as diethyl ether and tetrahydrofuran; ketones, such as acetone and methyl isobutyl ketone; halogenated hydrocarbons, such as 1,1,1-trichloroethane, dichloroethane, alpha,alpha,alpha-trifluorotoluene, and hexafluoroxylene. The instant fluorosilicone resin is insoluble in aromatic solvents, such as benzene and toluene; and alkanes, such as hexane and heptane.

The fluorosilicone resin according to the present invention can be prepared by the cohydrolysis of an organosilicon compound having the following general formula

$$CF_3 CH_2 CH_2 Me_2 SiX \qquad (b)$$

with a silicon compound having the following general formula

$$SiX_4 \qquad (c)$$

in the presence of organic solvent and aqueous acid solution. In formulas (b) and (c), X is halogen, as exemplified by chlorine and bromine or alkoxy, as exemplified by methoxy, ethoxy, propoxy, and butoxy. The resulting fluorosilicone resin solution is then subjected to a water wash, neutralization, and water elimination. This is followed by thermal dehydration in the presence of an alkali metal catalyst and, finally, a water wash and neutralization.

The techniques for cohydrolysis of the organic compound with general formula (b) and silicon compound with general formula (c) include, for example, (i) placing a mixture thereof into solution in organic solvent and dripping this solution into the aqueous acid solution with stirring, and (ii) dripping the aqueous acid solution into the aforesaid organic solvent solution while stirring.

The organic solvent preferably dissolves the compound with general formula (b), the compound with general formula (c), and the fluorosilicone resin product. Such organic solvents are exemplified by ethers, such as diethyl ether and tetrahydrofuran, ketones, such as acetone and methyl isobutyl ketone, and halogenated hydrocarbons, such as 1,1,1-trichloroethane, dichloroethane, alpha,alpha,alpha-trifluorotoluene, and hexafluoroxylene.

The concentrations of the compounds with general formulas (b) and (c) in the organic solvent may be selected as desired according to the workability; however, these concentrations are generally adjusted so as to give a concentration of 10 to 80 weight percent for the fluorosilicone resin product in the organic solvent. The aqueous acid solution comprises the aqueous solution of an acid, such as sulfuric acid, nitric acid, or hydrochloric acid, aqueous hydrochloric acid solutions being preferred. In the particular case of hydrochloric acid, the hydrogen chloride concentration must be at least 5 weight percent. The temperature during and after addition should be 0 to 120°C.

This cohydrolysis between organosilicon compound (b) and silicon compound (c) affords a fluorosilicone resin solution. Organic solvent or water is then added as necessary and this is followed by standing and separation of the aqueous layer.

The organic solvent layer (containing the fluorosilicone resin) is subsequently washed with water to neutrality, and this is preferably followed by a water elimination step. When water is poorly soluble in the organic solvent, this water elimination may be conducted at the organic solvent's azeotrope using a water-separation tube.

Since the resulting fluorosilicone resin contains a moderate quantity of residual silanol groups, these residual silanol groups are then dehydratively condensed with one another by the addition of alkali metal catalyst to the organic solvent solution of the fluorosilicone resin and heating. This also makes it possible to adjust such properties as, for example, the softening point, by adjusting the fluorosilicone resin's molecular weight distribution through re-equilibration. The alkali metal catalyst is exemplified by alkali metal hydroxides (e.g., potassium hydroxide, sodium hydroxide, and cerium hydroxide) and silanolates. This process of condensing the residual silanol groups is preferred because it stabilizes the properties of the fluorosilicone resin.

The alkali metal catalyst is then neutralized followed by washing with water, another water elimination, and stripping off the organic solvent to give fluorosilicone resin according to the present invention.

In a second method, the residual silanol groups in the fluorosilicone resin may be capped (blocked) by addition to the fluorosilicone resin solution of an organosilicon compound with the following general formula

$$(R'_3Si)_aQ \qquad (d)$$

wherein R' is a substituted or unsubstituted monovalent hydrocarbon group having 1 to 8 carbon atoms and a is 1 or 2. When a = 1, Q is a monovalent group selected from the group consisting of hydrogen, halogen, hydroxyl, alkoxy, -NR''$_2$, -ONR''$_2$, and -OCOR'' and when a = 2, Q is a divalent group selected from the group consisting of -O- and -NR''-, in which R'' is hydrogen or alkyl.

This organosilicon compound having general formula (d) is a compound which readily reacts with the silanol group. R' in the preceding formula is independently selected from monovalent hydrocarbon groups or substituted monovalent hydrocarbon groups having 1-8 carbon atoms and may be exemplified by alkyl radicals, such as methyl, ethyl, propyl and butyl; alkenyl radicals, such as vinyl and allyl; aryl radicals, such as phenyl; and halogenated hydrocarbon radicals, such as 3,3,3-trifluoropropyl. The individual molecule may contain only a single species or multiple species of R'. In the above formulas, R'' is hydrogen or alkyl, and this alkyl is exemplified by methyl, ethyl, propyl, butyl, and pentyl. The quantity of component (d) to be used will vary with the quantity of residual silanol group. However, the addition of 10 to 70 weight parts per 100 weight parts fluorosilicone resin with average unit formula (a) will be satisfactory, and any excess is removed. The organosilicon compound with general formula (d) is added to the fluorosilicone resin solution with heating as required. The fluorosilicone resin solution is then washed with water to neutrality. Water elimination is carried out as above, and the organic solvent is finally stripped off to afford fluorosilicone resin according to the present invention.

In the case of use of organosilicon compound with general formula (d), a constituent component other than those in average unit formula (a) may be present in small quantities, and the present invention encompasses this contingency. Moreover, the fluorosilicone resin with average unit formula (a) may contain small quantities of other constituent components insofar as the object of the present invention is not impaired.

Because the fluorosilicone resin according to the present invention is a solid at room temperature and is insoluble in aromatic hydrocarbon solvents (e.g., benzene, toluene) and aliphatic hydrocarbon solvents (e.g., hexane, heptane), it is suitable for use in those applications where such properties are crucial. For example, it is qualified for application for the formation of capsule films and silicone resin protective films where solvent resistance is required. It is also useful as an additive for modifying the physical properties of other organic resins. The fluorosilicone resin may be employed by itself in some applications, but it may also be used as an additive for other resins. Moreover, it can be used for thermoplastic capsules.

The present invention will be explained below using illustrative examples, in which Me denotes the methyl radical.

Example 1

The following were introduced into a flask and heated to 60°C with stirring: 11.44 g (0.06 mole) of chlorosilane with the formula CF$_3$CH$_2$CH$_2$Me$_2$SiCl, 20.8 g (0.1 mole) of tetraethoxysilane, and 12.0 g of trifluoromethylbenzene. Into this reaction system was then dripped 13 g of 4.2 N aqueous hydrochloric acid over 30 minutes. Stirring was continued for 30 minutes at 77°C after the completion of addition. Trifluoromethylbenzene (25 g) was subsequently added followed by stirring for 5 minutes and then quiescence. The reaction mixture separated into two layers, and the organic solvent layer (lower layer) was collected. It was repeatedly washed with water after adjusting to pH 7 with 4 weight percent aqueous sodium bicarbonate. The trifluoromethylbenzene layer was then collected, transferred into a flask equipped with a water-separation tube, and heated in order to eliminate water at the reflux temperature of trifluoromethylbenzene. After subsequent concentration to a solids fraction of 50 weight percent, 8.1 g (0.025 mole) of a silazane having the formula $(CF_3CH_2CH_2Me_2Si)_2NH$ was added followed by heating under reflux for 6 hours. Cooling, neutralization with acid, water washing, and removal of the solvent afforded 9.1 g of a fluorosilicone resin which was solid at room temperature.

This fluorosilicone resin was a white solid at room temperature and had a softening point of 105°C. It was analyzed with the following results.
$^{29}Si$ NMR delta (ppm):
13(1.13 Si, br, $\overline{CF_3CH_2CH_2Me_2Si}O_{1/2}$)
-100(0.185 Si, br, $ROSiO_{3/2}$)
(R = $CH_3CH_2$ or H)
-110(0.82 Si, br, $SiO_{4/2}$)
$^{13}C$ NMR delta (ppm):
128(36.80 C, q, $-CF_3$)
59(0.91 C, s, $-OCH_2CH_3$)
28(37.90 C, q, $-\overline{C}H_2CH_2CF_3$)
18(1.00 C, s, $-OCH_2\overline{C}H_3$)
10(37.70 C, s, $-SiC\overline{H}_2CH_2$)
0(71.00 C, s, $-SiC\overline{H}_3$)
GPC (gel permeation chromatography):
$\overline{M}_w$ (weight-average molecular weight) = 3.5 x 10^3
$M_n$ (number-average molecular weight) = 3.0 x 10^3
The fluorosilicone resin product was thus confirmed to be a compound having the following chemical structure in agreement with the inputs and having residual hydroxyl groups in terminal position:

$(CF_3CH_2CH_2Me_2SiO_{1/2})_{1.13}(SiO_{4/2})_{1.0}$

Example 2

Fluorosilicone resin (10.6 g) was prepared by the same method as in Example 1, but in this case using 9.5 g (0.05 mole) of chlorosilane $CF_3CH_2CH_2Me_2SiCl$ and 20.8 g (0.10 mole) of tetraethoxysilane as reactants. The resin was a white solid with softening point = 130°C.

Example 3

Fluorosilicone resin (8.1 g) was prepared by the same method as in Example 1, but in this case using 7.6 g (0.04 mole) of chlorosilane $CF_3CH_2CH_2Me_2SiCl$ and 20.8 g (0.10 mole) of tetraethoxysilane as reactants.
The resin was a white solid with no softening point up to 300°C. The molecular weights determined by GPC were $M_w$ = 8.5 x 10^3 and $M_n$ = 7.5 x 10^3.

Example 4

Fluorosilicone resin (9.7 g) was prepared by the same method as in Example 1, but in this case using 7.6 g (0.04 mole) of chlorosilane $CF_3CH_2CH_2Me_2SiCl$ and 20.8 g (0.10 mole) of tetraethoxysilane as reactants and using 4.8 g (0.03 mole) of the silazane $(Me_3Si)_2NH$ in place of the 8.1 g (0.025 mole) of silazane $(CF_3CH_2CH_2Me_2Si)_2NH$. The resin was a white solid with no softening point up to 300°C.

The analytic results for this product were as follows.
$^{29}Si$ NMR delta (ppm):
13(0.71 Si, br, $R'Me_2SiO_{1/2}$)
-100(0.22 Si, br, $ROSiO_{3/2}$)
-110(0.82 Si, br, $SiO_{4/2}$)
(R = $CH_3CH_2$ or H
R' = $CF_3CH_2CH_2$ or Me)
$^{13}C$ NMR delta (ppm):
128(6.01 C, q, $-CF_3$)
59(0.94 C, s, $-OCH_2CH_3$)
28(6.10 C, q, $-\overline{C}H_2CH_2CF_3$)
18(1.00 C, s, $-OCH_2\overline{C}H_3$)
10(6.15 C, s, $-SiCH_2\overline{C}H_2$)
0(17.10 C, s, $-SiC\overline{H}_3$)
GPC (gel permeation chromatography):
$\overline{M}_w$ (weight-average molecular weight) = 9.0 x 10^3
$M_n$ (number-average molecular weight) = 8.0 x 10^3
The white solid product was thus confirmed to be a silicone resin having residual hydroxyl and ethoxyl groups in terminal position and having a chemical structure represented by the following average unit formula:

$(CF_3CH_2CH_2Me_2SiO_{1/2})_{0.51}(Me_3SiO_{1/2})_{0.20}(SiO_{4/2})_{1.0}$

**Claims**

1. A fluorosilicone resin having the average unit formula

   $(CF_3CH_2CH_2Me_2SiO_{1/2})_n(SiO_{4/2})_m$

   wherein Me denotes a methyl radical and n and m are each numbers greater than zero, with the proviso that said resin is solid at room temperature and either does not have a softening point or has a softening point of at least 40°C.

2. The fluorosilicone resin of claim 1, wherein the ratio of n/m is 0.2 to 3.0.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 328 349 (CHARLES W. LENTZ)<br>* claims 1-8 *<br>* column 1, line 9 – line 21 *<br>* column 1, line 52 – line 57 *<br>* column 2, line 1 – line 8 *<br><br>----- | 1-2 | C08G77/24<br><br><br><br><br><br><br><br><br><br>TECHNICAL FIELDS SEARCHED (Int. Cl.5)<br><br>C08G<br>C08L |

The present search report has been drawn up for all claims

| Place of search | Date of completion of the search | Examiner |
|---|---|---|
| THE HAGUE | 03 AUGUST 1992 | DEPIJPER R.D.C. |